# EUROPÄISCHE PATENTSCHRIFT

(11) **EP 1 125 341 B1**
(45) Veröffentlichungstag und Bekanntmachung des Hinweises auf die Patenterteilung: **18.10.2006**
(21) Anmeldenummer: 00965795.8
(22) Anmeldetag: 30.08.2000
(51) Int. Cl.: H01Q 1/24, H01Q 1/40, H04B 1/38, H04M 1/02

(54) **ANTENNE FÜR EIN MOBILFUNKGERÄT**
ANTENNA FOR A MOBILE RADIO TELEPHONE
ANTENNE POUR APPAREIL DE TELEPHONIE MOBILE

(30) Priorität: 31.08.1999 DE 19941343
(43) Veröffentlichungstag der Anmeldung: 22.08.2001
(73) Patentinhaber: BenQ Mobile GmbH & Co. OHG, 81667 München (DE)
(72) Erfinder: RICHTER, Thomas, D-47495 Rheinberg (DE)
(74) Vertreter: Epping - Hermann - Fischer
(86) Internationale Anmeldenummer: PCT/DE2000/002957
(87) Internationale Veröffentlichungsnummer: WO 2001/017062

(56) Entgegenhaltungen:
- EP-A- 0 923 152
- WO-A-94/14207
- WO-A-99/41800
- US-A- 5 168 278
- US-A- 5 650 790
- US-A- 6 002 371

## Beschreibung

Die vorliegende Erfindung betrifft eine Antenne für ein Mobilfunkgerät, gekennzeichnet durch einen einseitig offenen Aufnahmekörper für eine Antennenstruktur, wobei der Aufnahmekörper derart ausgebildet ist, daß er durch eine Öffnung einer Unterschale des Mobilfunkgerätes von innen durchschiebbar ist.

Eine derartige Antenne ist z. B. aus der DE 296 03 572 U1 bekannt. Diese Antenne wird nach der Vormontage zu Ihrer Befestigung nur noch in einen Durchbruch des Gehäuses eingedrückt. Da diese Antenne lediglich in den Durchbruch eingedrückt ist, weist sie keine große Festigkeit auf und es kann bei einem Fall des Mobilfunkgerätes leicht zu Beschädigungen kommen. Darüber hinaus verhindert das Einpressen der fertigen Antenne eine einfache vollautomatische Montage des gesamten Mobilfunkgerätes.

Aufgabe der vorliegenden Erfindung ist es, eine Antenne der eingangs genannten Art anzugeben, welche bei einem Fall des Mobilfunkgerätes eine größere Stabilität aufweist und welche eine einfache automatische Gesamtmontage des gesamten Mobilfunkgerätes ermöglicht.

Diese Aufgabe wird erfindungsgemäß durch eine Antenne gelöst, welche dadurch gekennzeichnet ist, dass der Aufnahmekörper (1) ein offenes kragenförmiges Fußteil (4) aufweist, welches in der Unterschale (6) mittels zweier seitlich eingreifender Rasthaken (7, 8) gehalten ist, von denen einer (7) Bestandteil einer Außenwand der Unterschale (6) ist, und von denen der andere Rasthaken (8) im mittleren Bereich der Unterschale (6) ausgebildet ist, wobei der erste Rasthaken (7) durch die Oberschale und der zweite Rasthaken (8) durch eine in die Unterschale einzubringende Baugruppe (9) verriegelt wird.

Durch die erfindungsgemäße Antenne ist gewährleistet, dass sie sehr leicht jeweils dem Design des Gehäuses des Mobilfunkgeräts angepaßt werden kann, dass sie bei einem Fall des Mobilfunkgerätes eine größere Stabilität aufweist und dass eine einfache vollautomatische Montage des gesamten Mobilfunkgerätes ermöglicht wird.

Die Stabilität der Einheitantenne-Mobilfunkgerät wird durch eine zweckmäßige Ausgestaltung der Erfindung erhöht, die dadurch gekennzeichnet ist, dass das freie Ende des Fußteils an einer quer zur Längsrichtung des Mobilfunkgerätes verlaufenden ersten Stützrippe anliegt, und dass das Fußteil zwischen einer Seitenwand der Unterschale und einer in Längsrichtung des Mobilfunkgerätes verlaufenden zweiten Stützrippe gelagert ist.

Weitere zweckmäßige Ausgestaltungen der erfindungsgemäßen Antenne ergeben sich aus den Unteransprüchen sowie aus der nachfolgenden Beschreibung eines Ausführungsbeispiels anhand der Zeichnung.

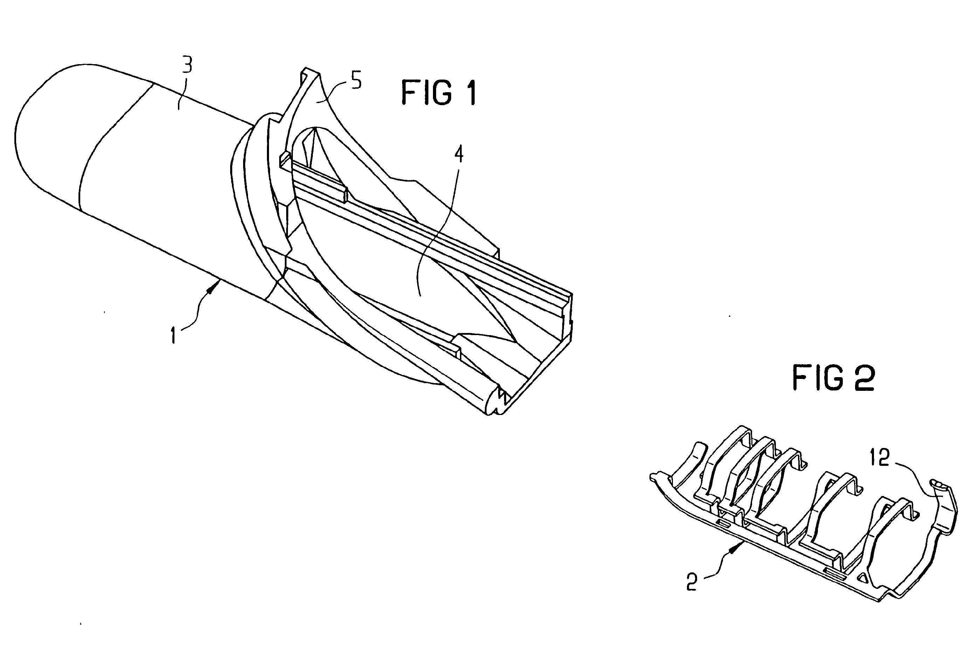

In der Zeichnung zeigen
Figur 1 eine perspektivische Ansicht eines Aufnahmekörpers der erfindungsgemäßen Antenne,
Figur 2 eine beispielhafte Helix-Struktur für die erfindungsgemäße Antenne,

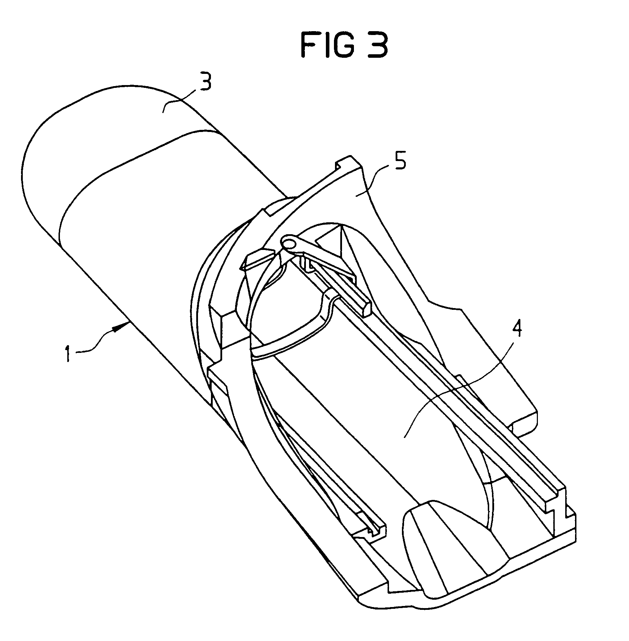

Figur 3 eine perspektivische Ansicht des in Figur 1 gezeigten Aufnahmekörpers, welcher mit der in Figur 2 gezeigten Helix-Struktur bestückt ist,

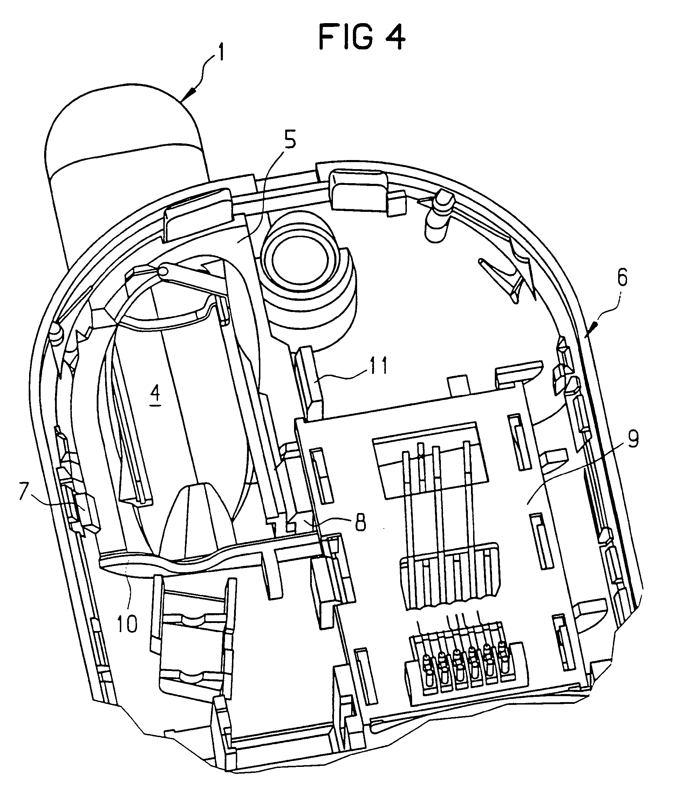

Figur 4 eine perspektivische Ansicht einer oben offenen Unterschale eines Mobilfunkgerätes, bei welcher eine erfindungsgemäße Antenne eingelegt ist, und

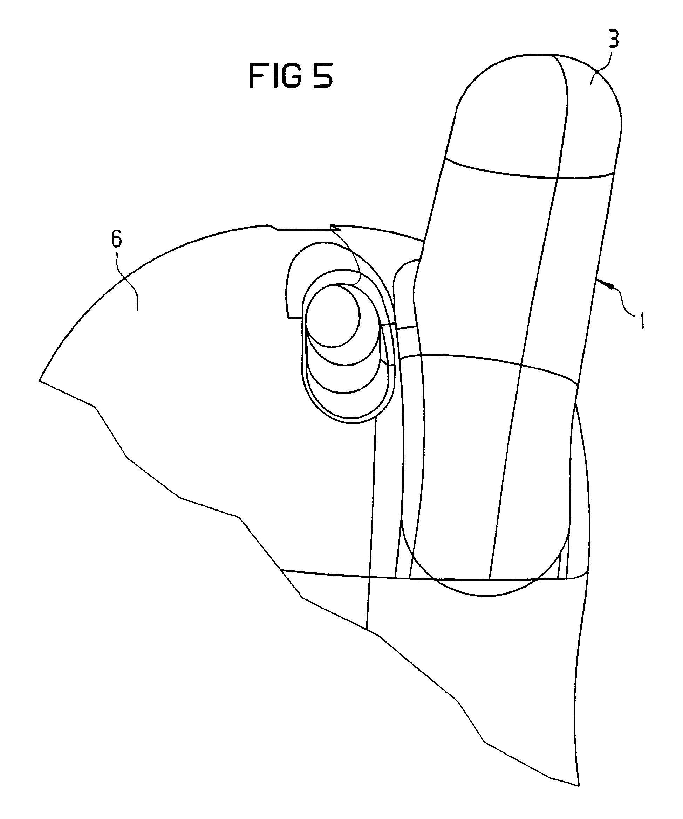

Figur 5 eine teilweise perspektivische Ansicht von unten einer Unterschale eines Mobilfunkgeräts mit einer eingelegten erfindungsgemäßen Antenne.

Die erfindungsgemäße Antenne besteht im wesentlichen aus einem Aufnahmekörper 1 für eine Antennenstruktur, z.B. einer Helix-Struktur 2. Der Aufnahmekörper 1 besteht im wesentlichen aus einem im eingebauten Zustand aus dem Mobilfunkgehäuse herausragenden hülsenförmigen Teil 3 und einem Fußteil 4, welches im wesentlichen kragenförmig ausgebildet ist, wobei der Kragen 5, wenn die erfindungsgemäße Antenne durch eine in einer Unterschale 6 vorhandenen Öffnung hindurchgesteckt worden ist, auf der Innenseite der Unterschale 6 anliegt.

Der Aufnahmekörper 1 der erfindungsgemäßen Antenne wird in die Unterschale 6 eingelegt und dort verrastet. Dazu dienen die Rasthaken 7 und 8. Der eine Rasthaken 7 ist Bestandteil der benachbarten Innenwand der Unterschale 6. Nach Montage der entsprechenden Oberschale wird die Schalenwand derart versteift, daß der Rasthaken 7 einen großen Widerstand gegenüber einem Lösen der Rastverbindung bildet.

Der zweite Rasthaken 8 liegt dem ersten Rasthaken 7 gegenüber und ist Bestandteil der Unterschale 6. Dieser zweite Rasthaken 8 wird nach Montage der Antenne durch ein weiteres in der Unterschale 6 einzubringendes Bauteil, in diesem Falle ein SIM-Card-Leser 9 verriegelt. Dadurch wird ein zerstörungsfreies Herauslösen des Aufnahmekörpers 1 verhindert.

Zur Erhöhung der Stabilität bei Beanspruchung der Einheit Mobilfunkgerät-Antenne, z.B. durch Hinfallen, liegt das freie Ende des Fußteils 4 an einer quer zur Längsrichtung des Mobilfunkgerätes verlaufenden ersten Stützrippe 10 an, so daß Kräfte in Gerätelängsrichtung durch diese erste Stützrippe 10 aufgenommen und in das Gerät abgeleitet werden.

Kräfte quer zur Geräteachse werden auf der einen Seite durch die Schalenwand und auf der gegenüberliegenden Seite durch den Rasthaken 6 und eine zweite Stützrippe 11, welche in Längsrichtung des Mobilfunkgerätes verläuft, aufgenommen. Zudem werden Querkräfte auch über die Antennenkragenkontur von der Unterschale aufgenommen.

Im dargestellten Beispiel wurde als Antennenstruktur eine Helix-Struktur, aufgebaut als ein Stanz-Biegeteil, verwendet, welches leicht herzustellen ist und darüber hinaus den Vorteil aufweist, daß sein Ende 12 gut als Druckkontaktfeder für den Kontakt der Antenne mit der Elektronik-Baugruppe ausgebildet werden kann.

Es ist aber bei der erfindungsgemäßen Antenne auch eine andere Antennenstruktur als eine Helix-Struktur denkbar.

## Patentansprüche

1. Antenne für ein Mobilfunkgerät, **gekennzeichnet durch** einen einseitig offenen Aufnahmekörper (1) für eine Antennenstruktur (2), wobei der Aufnahmekörper (1) derart ausgebildet ist, daß er **durch** eine Öffnung einer Unterschale (6) des Mobilfunkgerätes von innen durchschiebbar ist, **dadurch gekennzeichnet, daß** der Aufnahmekörper (1) ein offenes kragenförmiges Fußteil (4) aufweist, welches in der Unterschale (6) mittels zweier seitlich eingreifender Rasthaken (7, 8) gehalten ist, von denen einer (7) Bestandteil einer Außenwand der Unterschale (6) ist, und von denen der andere Rasthaken (8) im mittleren Bereich der Unterschale (6) ausgebildet ist, wobei der erste Rasthaken (7) **durch** die Oberschale und der zweite Rasthaken (8) **durch** eine in die Unterschale einzubringende Baugruppe (9) verriegelt wird.

2. Antenne nach Anspruch 1, **dadurch gekennzeichnet, daß** das freie Ende des Fußteils (4) an einer quer zur Längsrichtung des Mobilfunkgerätes verlaufenden ersten Stützrippe (10) anliegt.

3. Antenne nach einem der vorhergehenden Ansprüche, **dadurch gekennzeichnet, daß** das Fußteil (4) zwischen einer Seitenwand der Unterschale (6) und einer in Längsrichtung des Mobilfunkgerätes verlaufenden zweiten Stützrippe (11) gelagert ist.

4. Antenne nach einem der vorhergehenden Ansprüche, **dadurch gekennzeichnet, daß** die Antennenstruktur ein als Druckkontaktfeder ausgebildetes Ende (12) aufweist.

5. Antenne nach einem der vorhergehenden Ansprüche, **dadurch gekennzeichnet, daß** die Antennenstruktur eine Helix-Struktur (2) ist.

## Claims

1. Antenna for a mobile radio telephone, **characterized by** a housing body (1), which is open on one side, for an antenna structure (2), whereby the housing body (1) is designed in such a way that it can be pushed from the inside through an opening in a lower shell (6) of the mobile radio telephone, **characterized in that** the housing body (1) has an open, collar-shaped base part (4), which is held in the lower shell (6) by means of two laterally engaging catch hooks (7, 8), of which one (7) forms part of an outer wall of the lower shell the (6), and of which the other catch hook (8) is formed in the middle area of the lower shell (6), whereby the first catch hook (7) is locked by means of the upper shell, and the second catch hook (8) is locked by means of a module (9) which is to be inserted into the lower shell.

2. Antenna according to Claim 1, **characterized in that** the free end of the base part (4) lies on a first support rib (10) running across the longitudinal direction of the mobile radio telephone.

3. Antenna according to one of the preceding claims, **characterized in that** the base part (4) is mounted between a side wall of the lower shell (6) and a second support rib (11) running in the longitudinal direction of the mobile radio telephone.

4. Antenna according to one of the preceding claims, **characterized in that** the antenna structure has one end (12) which is designed as a pressure contact spring.

5. Antenna according to one of the preceding claims, **characterized in that** the antenna structure is a helix structure (2).

## Revendications

1. Antenne pour un appareil de téléphonie mobile, **caractérisée par** un corps de logement (1) ouvert sur un côté, pour une structure d'antenne (2), le corps de logement (1) étant conçu de telle sorte qu'il peut être glissé par l'intérieur à travers une ouverture d'une coque inférieure (6) de l'appareil de téléphonie mobile, **caractérisée en ce que** le corps de logement (1) présente une partie de base (4) ouverte et en forme de col, qui est maintenue dans la coque inférieure (6) au moyen de deux crochets d'encliquetage (7, 8) s'engageant sur le côté, dont l'un (7) est un élément constitutif d'une paroi extérieure de la coque inférieure (6), et dont l'autre crochet d'encliquetage (8) est réalisé dans la zone centrale de la coque inférieure (6), le premier crochet d'encliquetage (7) étant verrouillé par la coque supérieure et le second crochet d'encliquetage (8) par un ensemble (9) à introduire dans la coque inférieure.

2. Antenne selon la revendication 1, **caractérisée en ce que** l'extrémité libre de la partie de base (4) s'appuie sur une première nervure de soutien (10) agencée transversalement à la direction longitudinale de l'appareil de téléphonie mobile.

3. Antenne selon l'une quelconque des revendications précédentes, **caractérisée en ce que** la partie de base (4) est logée entre une paroi latérale de la coque inférieure (6) et une seconde nervure de soutien (11) agencée dans la direction longitudinale de l'appareil de téléphonie mobile.

4. Antenne selon l'une quelconque des revendications précédentes, **caractérisée en ce que** la structure d'antenne présente une extrémité (12) réalisée comme ressort de contact à pression.

5. Antenne selon l'une quelconque des revendications précédentes, **caractérisée en ce que** la structure d'antenne est une structure d'hélice (2).
